(19)

Europäisches
Patentamt
European
Patent Office
Office européen
des brevets

(11) **EP 2 390 643 A1**

(12) **EUROPEAN PATENT APPLICATION**

(43) Date of publication:
**30.11.2011 Bulletin 2011/48**

(51) Int Cl.:
***G01M 3/20*** *(2006.01)*      ***G01M 3/22*** *(2006.01)*

(21) Application number: **11163170.1**

(22) Date of filing: **20.04.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **28.05.2010 US 790636**

(71) Applicant: **Agilent Technologies, Inc.
Santa Clara, CA 95051 (US)**

(72) Inventors:
• **Perkins, Charles
Boston, MA 02116 (US)**
• **Palenstyn, Pieter
Plympton, MA 02367 (US)**

(74) Representative: **Foster, Mark Charles et al
Mathisen & Macara LLP
120 Bridge Road
Chertsey
Surrey KT16 8LA (GB)**

(54) **Leak test probe for use in industrial facilities**

(57)      Methods and apparatus are provided for performing accurate, repeatable leak test measurements in wet, dusty and/or fluid-filled systems, such as a power plant, with no special sampling pumps, carrier gases or separators required. A leak detector probe (102) is installed directly in a pipe or other component (110) carrying a gas flow (112) to be tested and is coupled to the inlet of a leak detector (130). The leak detector probe (102) includes a test gas permeable membrane (182) which is positioned in the gas flow to be tested. The test gas permeable membrane may, for example, be positioned in a central region (132) of a pipe in the flow of gas toward the evacuation pump. In some embodiments, the position of the leak detector probe in the pipe or other component may be adjustable.

**FIG. 3**

EP 2 390 643 A1

## Description

### FIELD OF THE INVENTION

This invention relates to detection of leaks in large piping systems operating below atmospheric pressure and, more particularly, to methods and apparatus for test gas leak detection in industrial facilities, such as power plant systems, for example.

### BACKGROUND OF THE INVENTION

Helium mass spectrometer leak detection is a well-known leak detection technique. Helium is used as a test gas, which passes through the smallest of leaks in a sealed test piece. After passing through the leak, a test sample containing helium is drawn into a leak detection instrument and is measured. In the instrument, a mass spectrometer or other detector detects and measures the helium, In one approach, a test piece is pressurized with helium. A leak detector probe, or "sniffer probe", connected to the test port of the leak detector is moved around the exterior of the test piece. Helium passes through leaks in the test piece, is drawn into the probe and is measured by the leak detector. In another approach, the interior of the test piece is coupled to the test port of the leak detector and is evacuated. Helium is sprayed onto the exterior of the test piece, is drawn inside through a leak and is measured by the leak detector.

The prior art discloses leak detectors which incorporate a test gas permeable member coupled between a volume to be tested and a test port of the leak detector. The test gas permeable member allows the test gas, such as helium, to pass and blocks other gases, liquids and particles. The permeable member may be quartz, which is permeable to helium when heated. The prior art also discloses a composite membrane that includes a porous membrane, which may function as a substrate, and a semi-permeable membrane in series.

Various leak detector probe configurations are known in the prior art. A conventional leak detector probe includes a probe tip having an orifice of known size to control gas flow to the leak detector. Other known leak detector probes include a glass tube and a heating element. When the glass tube is heated, the glass is permeable to helium.

It is sometimes required to perform leak testing in vacuum applications that have wet, dusty and/or fluid-filled environments, for example chemical factories, the condenser pipes of a power plant, or in the exhaust of a steam ejector pump for in-line testing of turbines.

A power plant turbine is turned by high pressure steam generated in a boiler. The boiler heats water and converts it to steam, which flows through the turbine in order to rotate the turbine and generate electrical power. After exiting the turbine, the steam is routed through a condenser operating under vacuum, which cools the steam back to water, which is then returned to the boiler to start the cycle again.

Leaks in pipes and flanges of the system can result in power loss in excess of one megawatt per turbine. However, leak testing of power plant components presents a challenging set of problems. Typically, the high pressure region of a turbine operates at a pressure of about 200 bar (2900 PSIA), while the low pressure region operates at a vacuum pressure of 50 millibar (38 Torr) or lower. As a result of air in-leakage, the vacuum level can deteriorate and degrade the system efficiency. The most widely accepted method to identify air in-leakage is the use of test gases, such as helium. However, a known problem in the industry makes accurate and reliable leak testing difficult.

Power plant condenser systems are extremely large, with many pipes and flanges, all of which can leak. Typically, sections of power plant pipes and flanges are sprayed with helium test gas along the outside diameter. Helium is drawn into a leak and flows with the stream of gas inside the pipe downstream to the location of the leak detector. Due to atmospheric air convection, the effects of wind, etc., only a small amount of the helium sprayed actually enters the leak, and enshrouding a section of a large power plant to provide a controlled helium atmosphere is not practical. The amount of helium that actually enters a given leak is typically small and quite variable. In addition, the system contains large amounts of water vapor and amines, which add to the difficulty in testing. There is often a long distance between the connection point of the leak detector and a leak location, so reliable and repeatable response is critical for locating and repairing leaks in a time and cost effective manner. In power plant condensers and other industrial facilities, the volume of gas is very large in comparison to the small amount of test gas entering the system and thus is difficult to detect.

Various methods have been tried in an attempt to improve leak test reliability, including use of multiple pumps, sampling bypasses, tapping members in parallel with the pipe in test, and feed members circulating a carrier gas in viscous flow. Permeable membranes have also been used in prior art industrial leak testing. However, the membranes have typically been a flat disk pinched between two flanges and mounted on a flange side port on the outside diameter of the pipe, far away from the primary gas stream at the center of the pipe in test. A plurality of permeable members has also been tried in the prior art in an attempt to achieve reliable results. All of the prior art approaches have resulted in complex and expensive systems that are difficult to move around in a large, multi-story power plant complex and do not provide sufficiently reliable test results.

### SUMMARY OF THE INVENTION

The present invention provides methods and apparatus to perform accurate, repeatable leak test measurements in wet, dusty and/or fluid-filled systems, such as a power plant, with no special sampling pumps, carrier gases or separators required. A leak detector probe is installed directly in a pipe or other component carrying a gas flow to be tested and is coupled to the inlet of a leak detector, yielding a simple, highly reliable and efficient leak test process. The leak detector probe includes a test gas permeable membrane, which is positioned in the gas flow to be tested. The test gas permeable membrane may, for example, be positioned in a central region of a pipe in the flow of gas toward the evacuation pump. In some embodiments, the position of the leak detector probe in the pipe or other component may be adjustable. The ability to perform leak testing during normal plant operation saves time and money, and makes it possible to find leaks that might not be found when the system is tested at a non-operating pressure.

According to a first aspect of the invention, a leak detector probe assembly comprises a leak detector probe including a tube having an internal passage configured to carry a test gas to a leak detector and a permeable element that is permeable to the test gas, the permeable element affixed to the tube and disposed between an exterior of the probe and the internal passage of the tube, and a mounting mechanism configured to mount the leak detector probe to a component carrying a gas flow to be tested, with the permeable element having a desired position in the gas flow to be tested.

In some embodiments, the permeable element is located at a probe tip of the leak detector probe. The permeable element may comprise a porous structural element and a test gas permeable membrane in series with the structural element. In some embodiments, a disk-shaped permeable element may be sealed to an inside diameter of the internal passage in the tube. In further embodiments, the permeable element may have a hollow cylindrical configuration and may be sealed to the tube. A protective element may be positioned over the permeable element.

The mounting mechanism may be configured to mount the leak detector probe with the permeable element positioned in a central region of a pipe carrying the gas flow to be tested. In some embodiments, the mounting mechanism defines a fixed position of the leak detector probe. In further embodiments, the mounting mechanism is configured for adjustable positioning of the leak detector probe. The mounting mechanism may comprise a flange for sealing to an opening in the pipe or other component carrying the gas flow to be tested.

According to a second aspect of the invention, a method for leak detection comprises positioning a leak detector probe in a gas flow to be tested, the leak detector probe including a tube having an internal passage and a permeable element that is permeable to a test gas, the permeable element disposed in the gas flow between an exterior of the probe and the internal passage of the tube, and drawing test gas that passes through the permeable element into a leak detector for detection.

## BRIEF DESCRIPTION OF THE DRAWINGS

For a better understanding of the present invention, reference is made to the accompanying drawings, which are incorporated herein by reference and in which:

Fig. 1 is a schematic, cross-sectional view of a pipe, illustrating flow of a test gas in a central region of the pipe;

Fig. 2 is a schematic block diagram of a prior art leak detector configuration;

Fig. 3 is a schematic block diagram of a leak detector configuration in accordance with embodiments of the invention;

Fig. 4 is a schematic diagram of a leak detector probe assembly in accordance with embodiments of the invention;

Fig. 5 is an enlarged cross-sectional view of a probe tip of a leak detector probe in accordance with embodiments of the invention;

Fig. 6 is a schematic diagram of a leak detector probe assembly in accordance with further embodiments of the invention; and

Fig. 7 is an enlarged cross-sectional view of a probe tip of a leak detector probe in accordance with further embodiments of the invention.

## DETAILED DESCRIPTION OF THE INVENTION

The present invention provides methods and apparatus for performing accurate, repeatable leak test measurements in wet, dusty and/or fluid-filled systems, such as a power plant. A leak detector probe is installed directly into the pipe or other component carrying a gas flow to be tested and is coupled to the inlet of a leak detector, yielding a simple, highly reliable and efficient leak test process. The leak detector probe includes a test gas permeable membrane, which is positioned in the gas flow to be tested. The test gas permeable membrane may, for example, be positioned in a central region of a pipe in the flow of gas toward the evacuation pump. In some embodiments, the position of the leak detector probe in the pipe or other component may be adjustable. The ability to perform leak testing during normal plant operation saves time and money, and makes it possible to find leaks that might not be found when the system is tested at non-operating pressure.

The gas dynamics in a large industrial system, such as a power plant, present special problems for leak testing. The diameter of a typical power plant pipe can be 10 to 100 centimeters, while the mean free path for helium tracer gas, the distance a gas molecule can move before it strikes another gas molecule, is several orders of magnitude smaller. The mean free path for helium can be found using the general equation:

$$\lambda = 2.33 \times 10^{-20}\, (T) / (\xi^2 P)$$

where $\lambda$ is the mean free path in centimeters (cm), T is temperature in degrees Kelvin, $\xi$ is the diameter of a helium atom in centimeters, and P is the gas pressure in Torr. At 295K and a pressure of 38 Torr (50 millibar), the mean free path for helium is $3.7 \times 10^{-04}$ cm. In a mixture of gases having different masses, such as water vapor and air from a leak, the mean free path for helium will vary slightly depending on the relative concentration of gases and the temperature, but remains in the $10^{-04}$ cm range at the stated working pressure.

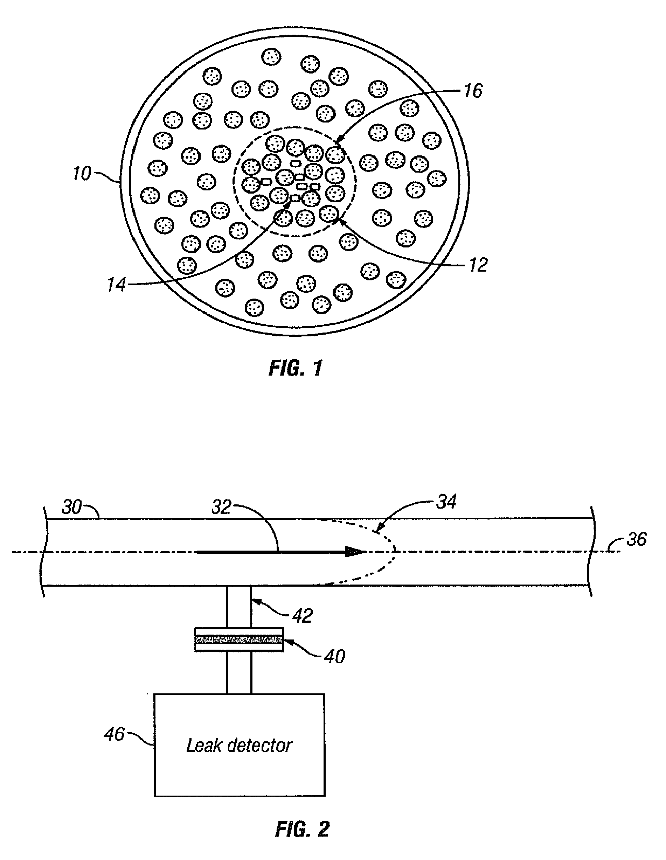

As shown in Fig. 1, the diameter of a typical power plant pipe 10 is several orders of magnitude larger than the mean free path for helium, making it difficult for helium test gas to migrate to a test port on the outside diameter of the pipe in test. The gas flow through pipe IO includes large molecules 12, such as water vapor, nitrogen and oxygen, and small helium atoms 14_ The helium atoms with a mean free path on the order of E - 4 cm are captured in the primary viscous, laminar flow by successive collisions with more massive and more numerous gas molecules. Thus, helium atoms 14 tend to flow in a region 16 near the central axis of pipe 10.

Further, it is well known in engineering literature that gas flow velocity in a pipe in laminar viscous flow is maximum at the central axis of the pipe and is zero at the pipe wall. The primary gas flow, and the flow of helium test gas, is therefore near the center of the pipe, far from a test port on the outside diameter of the pipe. Considering the small concentration of helium actually entering a leak, the extremely small mean free path of helium test gas and high gas flow only near the center of the pipe in a practical application, such as condenser piping in a power plant, any helium test gas entering the system through a leak is captured in the high flow region near the central axis of the pipe. Due to the small mean free path, the helium atoms cannot migrate laterally to a leak test port on the outside diameter of the pipe.

A prior art configuration for leak detection in a pipe is shown in Fig. 2. A pipe 30 carries a gas flow 32, having a flow profile 34 with a maximum flow at central axis 36 of pipe 30 and zero flow at the wall of pipe 30. A permeable membrane 40 is mounted between flanges of a lateral test port 42. Helium, if any, that enters lateral test port 42 passes through membrane 40 to a leak detector 46. Due to the small amount of helium in comparison with the volume of gas flow and due to the zero flow at the wall of the pipe, very little helium enters the test port 42.

With the configuration of Fig. 2, it is common to spray helium directly on a leak and to observe no response at all in the leak detector. After some time, turbulence inside the pipe may enable helium test gas to migrate laterally to the test port in the side of the pipe and be detected. However, pinpointing a small leak or multiple leaks in a large system can be a very difficult and time-consuming problem.

One approach to leak testing with the gas dynamics described above is to connect the leak detector to the exhaust of the vacuum pump used to maintain vacuum pressure in the condenser system. With prior art leak detection technology, the leak detector must be separated from the system to be tested by a trap to remove water vapor and dirt particles before the gas enters the leak detector. Any water vapor that goes into the leak detector will result in contamination of the spectrometer or other detection device, degrade pump lubricants and bearings, and corrode leak detector components. The trap used to remove water vapor from the gas will severely limit the sensitivity and response of the leak detector, again resulting in difficult leak test problems. In the case of an orifice-based sniffing probe, the suction line will eventually become blocked so that erroneous test results are obtained.

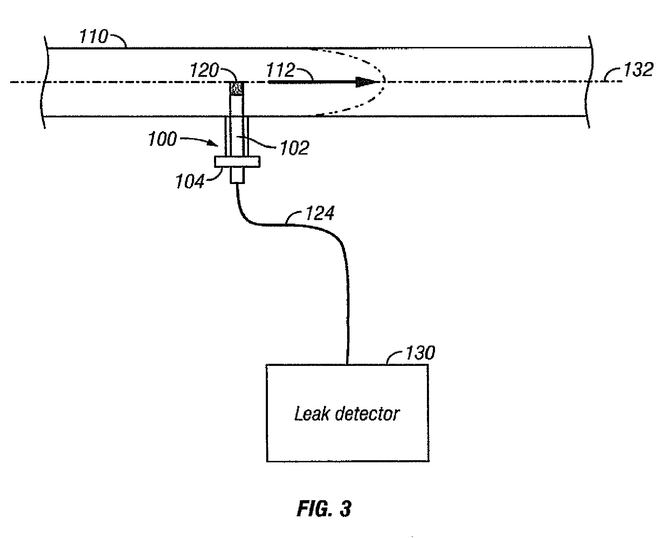

A leak detector probe assembly and a leak detector system in accordance with embodiments of the invention are shown in Figs. 3-5. As shown in Fig. 3, a leak detector probe assembly 100 includes a leak detector probe 102 and a mounting mechanism 104. The leak detector probe assembly 100 is installed in a pipe 110 carrying a gas flow 112 to be tested. A probe tip 120 of leak detector probe 102 is positioned by mounting mechanism 104 in the gas flow 112 in pipe 110. The leak detector probe 102 is connected by a hose 124 to a leak detector 130. In embodiments of the invention, the probe tip 120 of leak detector probe 102 includes a test gas permeable membrane, and the probe tip 120 is positioned at or near a central axis 132 of pipe 110.

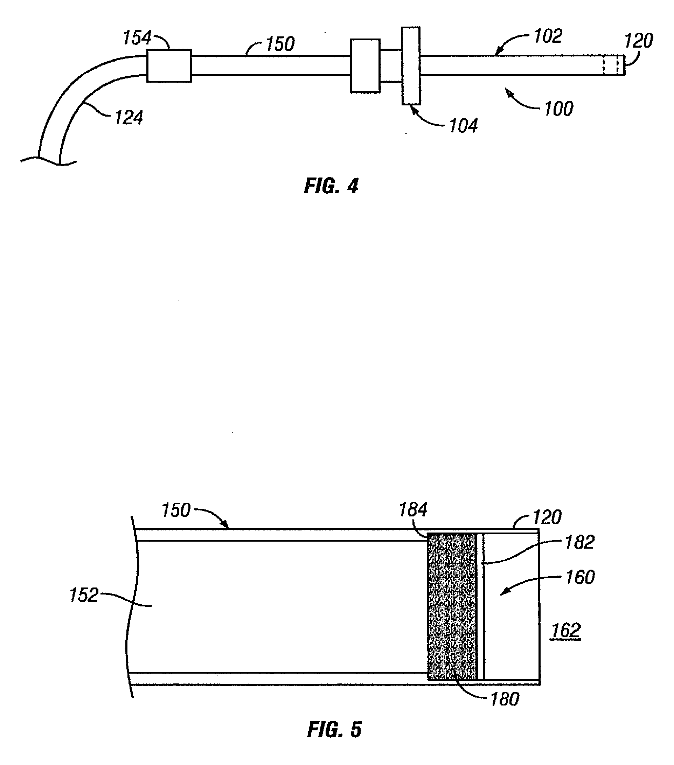

As shown in Figs. 4 and 5, embodiments of the leak detector probe 102 include a corrosion-resistant tube 150 having an internal passage 152, probe tip 120 and a connector 154. The probe tip 120 includes a permeable element 160 affixed to tube 150 and disposed between an exterior 162 of probe 102 and the internal passage 152 of tube 150. Probe tip 120 and connector 154 may be located at opposite ends of tube 150. The mounting mechanism 104 is configured to mount the tube 150 to a pipe, duct or other component carrying a gas flow to be tested, with the permeable element 160 having a desired position in the gas flow to be tested.

Connector 154 provides a vacuum-tight connection between tube 150 and hose 124. The tube 150 can be connected via hose 124 to the inlet of any type of helium or hydrogen leak detector. A leak detector vacuum pump creates vacuum inside hose 124 and leak detector probe 102.

Mounting mechanism 104, which can be a compression-type flange fitting, permits leak detector probe 102 to be installed vacuum-tight in a port of the pipe to be tested. In some embodiments, the position of leak detector probe 102 is fixed relative to mounting mechanism 104. In other embodiments, the position of leak detector probe 102 is adjustable relative to mounting mechanism 104. By loosening the compression fitting, leak detector probe 102 can be positioned inside the pipe such that the probe tip 120 and the permeable element 160 are located at or near the central axis 132 of the pipe 110, where the gas flow and helium concentration are maximum. It will be understood that any suitable mounting mechanism 104 can be utilized for positioning leak detector probe 102 in the gas flow to be tested. The mounting mechanism 104 may seal the leak detector probe 102 to the component in which it is mounted.

In some embodiments, permeable element 160 may include a porous structural member 180 and a test gas permeable membrane 182. The permeable element 160 is configured such that the test gas flows in series through the permeable membrane 182 and the structural member 180, or vice versa, to the internal passage 152 of tube 150. In the embodiment of Fig. 5, permeable element 160 is disk-shaped, with a diameter to permit sealing into the internal passage 152 of tube 150.

The materials of the structural member 180 and the permeable member 182 are selected to resist steam, hot water, amines and other chemicals that may be present in the steam system of a power plant or other industrial facility. The structural member 180 may be Vycor glass, alumina, beryllia, or a sintered metal, for example. The structural material is chosen for cost, porosity for the test gas, and material strength. The structural member may be a small diameter, 6 to 12 millimeters for example when the probe is to be mounted in a lateral port of the vacuum line in a condenser, or it may be large in diameter, 2 to 6 inches for example, if it is to be mounted in the outlet of a vacuum pump. The larger diameter gives more surface area for permeation and a higher signal. The thickness of the structural member varies with diameter and material strength, since it must withstand the force of one atmosphere differential pressure with vacuum inside and with atmospheric pressure outside.

The permeable membrane 182 may be CVD (chemical vapor deposition) deposited silica, or a polymer, such as FEP (fluorinated ethylene propylene), PFA (perfluoroalkoxy), or PTFE (polytetrafluoroethylene), or acetate, for example, but the material of the permeable membrane is not limited to these materials. The permeable membrane should be significantly permeable to helium and hydrogen, yet largely impermeable to water vapor, steam, and other gases. The membrane should withstand temperatures up to 500 degrees F, be inert to chemicals and solvents, and have a high resistance to impact and tearing. If a polymer is used, the permeable membrane 182 may be a polymer disc bonded to the structural member 180 or spray coated on the structural member 180.

The structural member 180 may be bonded to the tube 150 using an adhesive selected for its bonding characteristics for the structural and permeable members and for robustness in harsh environments. As shown in Fig. 5, tube 150 can be provided on its inside diameter with a shoulder 184 for retaining structural member 180. In some embodiments, a disc of stainless steel mesh screen can be bonded over permeable member 182 for protection against damage due to incidental impact.

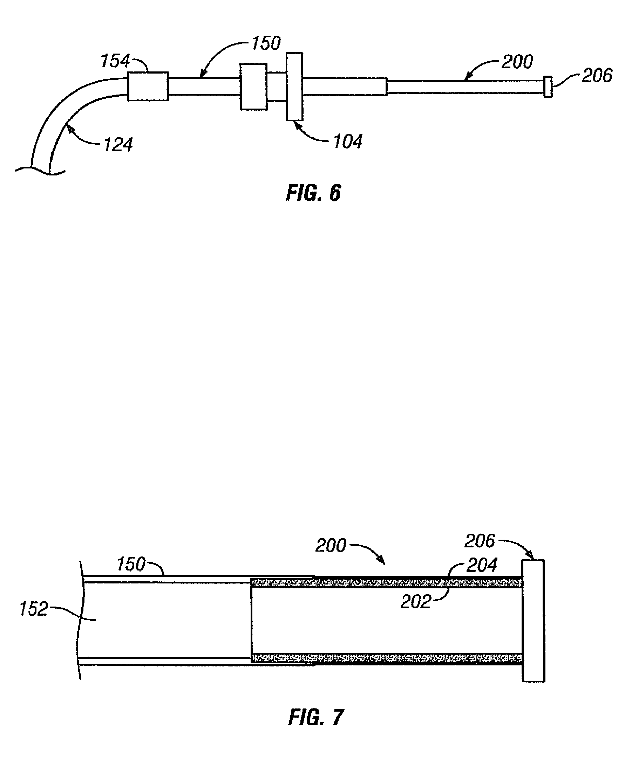

In further embodiments, a permeable element 200 may have a hollow cylindrical configuration, as shown in Figs. 6 and 7.' Permeable element 200 includes a tubular structural element 202 sealed to the end of tube 150. A test gas permeable membrane 204 may be affixed to an outside surface of structural element 202. In other embodiments, the test gas permeable membrane 204 may be affixed to an inside surface of structural element 202. The end of cylindrical permeable element 202 may be sealed with a corrosion resistant cap 206 or with an additional permeable element. The cylindrical permeable element 200 has greater surface area than the embodiment of Fig. 5 and thus provides greater sensitivity.

Permeable membrane 182 is located between the gas flow 112 in pipe 110 and the leak detector 130. Permeable membrane 182 may be a material that is permeable to the test gas used for leak detection under specified conditions. The test gas may be a light gas such as helium, hydrogen, neon, and isotopes thereof. The permeable membrane 182 substantially passes, or permeates, the test gas while substantially blocking other gases, liquids and particles. The permeable membrane 182 thus acts as a test gas window in the sense of allowing the test gas to pass, while blocking other gases, liquids and particles. The structural element 180 provides mechanical support for permeable membrane 182 and may be a porous material that passes the test gas. Composite membranes which have a more or less constant permeance to the test gas over a range of temperatures are described in U.S. Patent Publication No. 2008/0313881, published December 25, 2008, which is hereby incorporated by reference.

In use, the leak detector probe 102 is positioned in the pipe 110 to be tested with the probe tip 120 located at or near the region of maximum flow. As discussed above, the region of maximum flow may be near the central axis of the pipe or other conduit. The probe 100 is sealed into pipe 110 by vacuum flange 170 and is connected via hose 124 to leak detector 130. A technician then sprays helium or other test gas onto the pipe, pipe fitting or other component upstream in the gas flow from leak detector probe 102. The helium is drawn into the pipe 100 through a leak, travels with the gas flow to leak detector probe 102. The helium in the gas flow passes through permeable element 160 and is drawn into leak detector 130 by the vacuum pump of leak detector 130. The leak detector 130 determines the amount of helium in gas flow 112, which thereby indicates the presence or absence of a leak at the location where the helium was sprayed onto the pipe or other component. The leak detector probe 102 installed directly in the gas flow provides high sensitivity and a reliable leak test response.

Having thus described several aspects of at least one embodiment of this invention, it is to be appreciated various alterations, modifications, and improvements will readily occur to those skilled in the art. Such alterations, modifications, and improvements are intended to be part of this disclosure, and are intended to be within the spirit and scope of the invention. Accordingly, the foregoing description and drawings are by way of example only.

**Claims**

1. A leak detector probe assembly comprising:

   a leak detector probe (102) including a tube (150) having an internal passage (152) configured to carry a test gas to a leak detector (130) and a permeable element (160, 200) that is permeable to the test gas, the permeable element (160, 200) affixed to the tube (150) and disposed between an exterior (162) of the probe (102) and the internal passage (152) of the tube (150); and a mounting mechanism (104) configured to mount the leak detector probe (102) to a component (110) carrying a gas flow (112) to be tested, with the permeable element (160, 200) at a desired position in the gas flow to be tested.

2. The leak detector probe assembly as defined in claim 1, wherein the permeable element (160, 200) is located at a probe tip (120) of the leak detector probe (102).

3. The leak detector probe assembly as defined in claim 1 or 2, wherein the permeable element (160, 200) comprises a porous structural element (180, 202) and a test gas permeable membrane (182, 204) in series with the structural element (180, 202).

4. The leak detector probe assembly as defined in claim 1, 2 or 3, wherein the permeable element (160, 200) is sealed to the internal passage (152) in the tube (150).

5. The leak detector probe assembly as defined in claim 1, 2, 3 of 4, wherein the mounting mechanism 104 is configured to mount the leak detector probe (102) with the permeable element (160, 200) positioned in a central region (132) of a pipe carrying the gas flow (112) to be tested.

6. The leak detector probe assembly as defined in claim 1, 2, 3, 4 or 5, wherein the mounting mechanism (104) is configured for adjustable positioning of the leak detector probe (102).

7. The leak detector probe assembly as defined in any one of claims 1 to 6, wherein the test gas permeable membrane (182) is selected from silica, fluorinated ethylene propylene, perfluoroalkoxy, polytrafluroethylene, and acetate.

8. The leak detector probe assembly as defined in any one of claims 1 to 7, wherein the permeable element (160) is disk-shaped and is dimensioned for sealing to an inside diameter of the internal passage (152) in the tube (150).

9. The leak detector probe assembly as defined in any one of claims 1 to 7, wherein the permeable element (160) comprises a cylindrical permeable element sealed to the tube (150).

10. A method for leak detection, comprising:

    positioning a leak detector probe in a gas flow to be tested, the leak detector probe including a tube having an internal passage and a permeable element that is permeable to a test gas, the permeable element disposed in the gas flow between an exterior of the probe and the internal passage of the tube; and drawing test gas that passes through the permeable element into a leak detector for detection.

11. The method as defined in claim 10, wherein positioning a leak detector probe includes positioning the permeable element of the leak detector probe in a central region of a pipe.

12. The method as defined in claim 10 or 11, wherein positioning a leak detector probe comprises adjusting a position of a leak detector probe in the gas flow to be tested, preferably using an adjustable mounting mechanism.

13. The method as defined in claim 10, 11 or 12, wherein positioning a leak detector probe comprises positioning the permeable element of the leak detector probe in a region of maximum gas flow.

14. The method as defined in claim 10, 11, 12 or 13, wherein positioning a leak detector probe comprises positioning a disk-shaped permeable element or a cylindrical permeable element in the gas flow to be tested.

15. The method as defined in claim 10, 11, 12, 13 or 14, wherein the permeable element includes a porous structural element and a test gas permeable membrane affixed to the structural element.

**FIG. 1**

**FIG. 2**

**FIG. 3**

**FIG. 4**

**FIG. 5**

FIG. 6

FIG. 7

Europäisches
Patentamt

European
Patent Office

Office européen
des brevets

## EUROPEAN SEARCH REPORT

Application Number

EP 11 16 3170

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 828 527 A (BRIGGS W ET AL) 13 August 1974 (1974-08-13) | 1,2,4-14 | INV. G01M3/20 G01M3/22 |
| Y | * claims 1,2,4,9,10,17,20; figure 3 * ----- | 3,15 | |
| Y | WO 2004/113862 A1 (VARIAN INC [US]; PERKINS CHARLES [US]; PALENSTIJN PIETER N [US]) 29 December 2004 (2004-12-29) * column 2, lines 25-57; figure 2 * ----- | 3,15 | |

TECHNICAL FIELDS
SEARCHED      (IPC)

G01M

The present search report has been drawn up for all claims

| Place of search | Date of completion of the search | Examiner |
|---|---|---|
| The Hague | 16 September 2011 | Cilissen, Marcel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&: member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 11 16 3170

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2011

| Patent document cited in search report | | Publication date | Patent family member(s) | Publication date |
|---|---|---|---|---|
| US 3828527 | A | 13-08-1974 | NONE | |
| WO 2004113862 | A1 | 29-12-2004 | NONE | |

EPO FORM P0459

For more details about this annex : see Official Journal of the European Patent Office, No. 12/82

**EP 2 390 643 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080313881 A